(19) Europäisches Patentamt
European Patent Office
Office européen des brevets

(11) EP 0 590 420 B1

(12) # EUROPÄISCHE PATENTSCHRIFT

(45) Veröffentlichungstag und Bekanntmachung des Hinweises auf die Patenterteilung:
**29.01.1997 Patentblatt 1997/05**

(51) Int Cl.6: **C08L 59/00**

(21) Anmeldenummer: **93114891.0**

(22) Anmeldetag: **16.09.1993**

(54) **Schlagzähe Polyoxymethylenformmassen**

Impact-resistant polyoxymethylene molding compositions

Masses à mouler résistantes aux chocs à base de polyoxyméthylène

(84) Benannte Vertragsstaaten:
**BE CH DE ES FR GB LI NL SE**

(30) Priorität: **28.09.1992 DE 4232416**

(43) Veröffentlichungstag der Anmeldung:
**06.04.1994 Patentblatt 1994/14**

(73) Patentinhaber: **BASF Aktiengesellschaft**
**67063 Ludwigshafen (DE)**

(72) Erfinder:
- **Kielhorn-Bayer, Sabine, Dr.**
  **D-6701 Maxdorf (DE)**
- **Groll, Peter, Dr.**
  **D-6701 Dannstadt-Schauernheim (DE)**

(56) Entgegenhaltungen:
**EP-A- 0 164 667** **WO-A-91/11487**

EP 0 590 420 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft thermoplastische Formmassen, enthaltend

A) 10 bis 97 Gew.-% eines Polyoxymethylenhomo- oder -copolymerisats

B) 3 bis 50 Gew.-% eines thermoplastischen Elastomers aus der Gruppe der thermoplastischen Polyurethane, der Polyetherester und der Polyetheramide, die sich von Polyetherpolycarbonatdiolen als deren Weichphase ableiten und

C) 0 bis 50 Gew.-% eines faser- oder teilchenförmigen Füllstoffes oder deren Mischungen sowie

D) 0 bis 30 Gew.-% üblicher Zusatzstoffe und Verarbeitungshilfsmittel.

Darüber hinaus betrifft die Erfindung die Verwendung derartiger Formmassen zur Herstellung von Formkörpern jeglicher Art und die so erhaltenen Formkörper.

Polyoxymethylenhomo- oder -copolymerisate sind seit langem bekannt. Die Polymerisate zeichnen sich durch eine Anzahl ausgezeichneter Eigenschaften aus, so daß sie für die verschiedensten technischen Anwendungen geeignet sind. Dennoch hat es nicht an Versuchen gefehlt, Mittel zur Verbesserung der Schlagzähigkeit, insbesondere der multiaxialen Schlagzähigkeit, zu finden. Neben der Größenordnung der Zähigkeitswerte ist für einige Anwendungen auch das Bruchbild der geschädigten Teile ausschlaggebend.

So wird vor allem im KFZ-Bereich gefordert, daß bei Temperaturen bis zu -40°C ein duktiler Bruch auftritt, d.h. die Verformung des Formteils sollte insbesondere auch bei tiefen Temperaturen möglichst groß sein, bevor der Bruch erfolgt.

Aus der EP-A-117 664 und EP-A-116 456 sind beispielsweise thermoplastische Polyurethane als Schlagzähmodifier für Polyoxymethylen bekannt. Die Aufbaukomponenten der thermoplastischen Polyurethane sind Polyetherpolyole oder Polyesterpolyole, wobei Polyolkomponenten auch auf Basis von Polyoxytetramethylendiolen genannt sind. Die Polycarbonatdiole enthalten jedoch keine weiteren Comonomeren und weisen übliche mittlere Molekulargewichte auf.

Die Herstellung von Polycarbonatdiolen und ihre Verwendung zur Herstellung von thermoplastischen Polyurethanen sind u.a. in der EP-A-358 555, DE-A-27 26 416 und der EP-A-442 402 beschrieben, Polyoxymethylenformmassen werden nicht erwähnt.

Bekannte Polyoxymethylenformmassen besitzen jedoch die Nachteile, daß diese entweder eine gute Oxidationsbeständigkeit und ein gutes Ölquellverhalten (Dimensionsstabilität) und dafür eine geringe Hydrolysebeständigkeit oder eine gute Hydrolysebeständigkeit aber dafür eine schlechte Oxidationsbeständigkeit und Dimensionsbeständigkeit aufweisen. Die Kraftstoffbeständigkeit und mechanischen Eigenschaften sind ferner verbesserungswürdig, damit bei den unterschiedlichen Anwendungen die Formteile einen möglichst langen Gebrauch ermöglichen.

Die Aufgabe der vorliegenden Erfindung bestand daher darin, Polyoxymethylenformmassen zur Verfügung zu stellen, die die genannten Nachteile nicht aufweisen.

Demgemäß wurden die eingangs definierten thermoplastischen Formmassen gefunden, welche dadurch gekennzeichnet sind, daß die Polyetherpolycarbonatdiole, welche die Weichphase des thermoplastischen Elastomers B) bilden, im wesentlichen aufgebaut sind aus:

$b_1$) 3 bis 63,7 mol-% an Einheiten, die sich ableiten von einem Polyoxytetramethylendiol

$b_2$) 63,7 bis 3 mol-% an Einheiten, die sich ableiten von einem von $b_1$) verschiedenen Polyoxyalkylendiol mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen und

$b_3$) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

Bevorzugte Massen dieser Art sind den Unteransprüchen zu entnehmen.

Als Komponente A) enthalten die erfindungsgemäßen Formmassen 10 bis 97, vorzugsweise 40 bis 95 Gew.-% und insbesondere 60 bis 90 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden polyoxymethylencopolymere als Komponente A bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

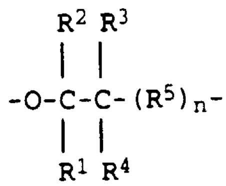

wobei $R^1$ bis $R^4$ unabhängig voneinander ein Wasserstofatom, eine $C_1$- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

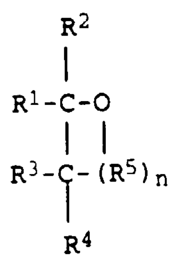

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

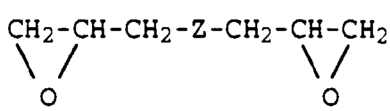

wobei Z eine chemische Bindung, -O-, -ORO- (R= $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) $M_w$ im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 3 bis 50, bevorzugt 5 bis 40 und insbesondere

10 bis 25 Gew.-% eines thermoplastischen Elastomers aus der Gruppe der thermoplastischen Polyurethane, der Polyetherester und der Polyetheramide, die sich von Polyetherpolycarbonatdiolen als deren Weichphase ableiten, dadurch gekennzeichnet, daß die Polyetherpolycarbonatdiole, welche die Weichphase des thermoplastischen Elastomers B) bilden, im wesentlichen aufgebaut sind aus:

$b_1$) 3 bis 63,7 mol-% an Einheiten, die sich ableiten von einem Polyoxytetramethylendiol

$b_2$) 63,7 bis 3 mol-% an Einheiten, die sich ableiten von einem von A) verschiedenen Polyoxyalkylendiolen mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen.

$b_3$) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

Die als Komponente $b_1$) eingesetzten Polyoxytetramethylendiole (auch Polytetrahydrofurane oder Polyoxytetramethylenetherglykole genannt) lassen sich nach bekannten Methoden durch katalytische Polymerisation von Tetrahydrofuran herstellen. Sie weisen i.a. ein durchschnittliches Molekulargewicht $\overline{M}_n$ (Zahlenmittelwert) von 150 bis 5000 auf, bevorzugt von 150 bis 2900 und insbesondere von 150 bis 450.

Der Anteil der Einheiten, die sich von der Komponente A) ableiten, beträgt 3 bis 63,7 mol-%, vorzugsweise 20 bis 50 mol-%.

Als Komponente b2) haben sich von $b_1$) verschiedene Polyoxyalkylendiole mit $C_2$- bis $C_8$-Alkylengruppen, insbesondere mit $C_2$- bis $C_4$-Alkylengruppen als geeignet erwiesen. Polyoxytetramethylendiole, die ein, von dem der Komponente $b_1$), unterschiedliches mittleres Molekulargewicht $\overline{M}_n$ (Zahlenmittelwert) aufweisen, sind bevorzugt zu nennen. Lineare und verzweigte Alkandiole mit 2 bis 14 C-Atomen, insbesondere Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol haben sich als besondes geeignet erwiesen. Von den cycloaliphatischen Diolen mit 3 bis 14 C-Atomen sind die unsubstituierten und mit $C_1$- bis $C_4$-Alkylgruppen substituierten 5- und 6-Ringe besonders geeignet, vorzugsweise Dihydroxycyclohexan und 1,4-Dihydroxymethylcyclohexan. Ferner können Ethylen- und Propylenoxid eingesetzt werden, sowie Mischungen der als Komponenten $b_2$) verwendeten Verbindungen.

Die Einheiten, die sich von der Komponente $b_2$) ableiten, werden bei der Herstellung der Polyetherpolycarbonatdiole in Mengen von 63,7 bis 3 mol-%, vorzugsweise in Mengen von 50 bis 20 mol-% verwendet.

Als Komponente $b_3$) sind Dialkylcarbonate mit $C_1$- bis $C_4$-Alkylgruppen bevorzugt, insbesondere Dimethylcarbonat, Diethylcarbonat und Dipropylcarbonat. Von den cyclischen Carbonaten mit $C_2$- bis $C_4$-Alkylenbrücken sind bevorzugt Ethylencarbonat, 1,2-Propylencarbonat sowie 1,3-Propylencarbonat zu nennen. Weiterhin kann noch Phosgen verwendet werden, sowie Mischungen der als Komponente $b_3$) genannten Verbindungen.

Die Polyetherpolycarbonatdiole enthalten die Einheiten, die sich von der Komponente $b_3$) ableiten, in Mengen von 33,3 bis 50 mol-%, insbesondere in Mengen von 40 bis 50 mol-%.

Es ist darauf hinzuweisen, daß in Abhängigkeit von der Art des eingesetzten Carbonats die Zusammensetzung der eingesetzten Monomermischung nicht immer auch die Zusammensetzung des Polyetherpolycarbonatdiols wiedergibt. In einigen Fällen treten Verluste an eingesetztem Carbonat bei der Umsetzung auf, so daß dieses in größeren Mengen eingesetzt werden muß. Im Falle von Phosgen hängt der Überschuß davon ab, wieviel Phosgen mit der gebildeten Salzsäure ausgetrieben wird und im besonders bevorzugten Fall von Dialkylcarbonaten, ob das eingesetzte Carbonat mit dem bei der Umesterung entstehenden Alkohol ein Azeotrop bildet oder nicht, wobei der Überschuß 0,5 bis 50 mol-%, bevorzugt 5 bis 35 mol-% beträgt.

Die Umsetzung der Komponenten $b_1$) und $b_2$) mit der Komponente $b_3$) wird bevorzugt in Gegenwart eines Katalysators durchgeführt.

Als Katalysatoren können die üblichen Umesterungskatalysatoren wie Tetraisopropylorthotitanat, Dibutylzinnoxid, Dibutylzinndilaurat und Zirkon-IV-acetylacetonat sowie Alkalialkoholate, beispielsweise Natrium-, Kaliummethylat und Natrium-, Kaliumethylat, verwendet werden. Die Menge an Katalysator beträgt 0,001 bis 2 %, bevorzugt 0,01 bis 0,5 %, bezogen auf die Gesamtmenge der Einsatzstoffe.

Die Reaktionskomponenten werden vorzugsweise mit dem Katalysator zum Sieden erhitzt, wobei bei der Verwendung von Dialkylcarbonaten der dabei gebildete entsprechende Alkohol oder das Azeotrop aus Carbonat und Alkohol destillativ abgetrennt werden kann. Die Umsetzung findet i.a. bei Temperaturen von 20 bis 250°C statt, bevorzugt bei 40 bis 200°C. Verwendet man Phosgen, so kann bei Temperaturen von 0 bis 100°C gearbeitet werden, vorzugsweise bei 20 bis 80°C. In diesem Fall wird der Reaktionsmasse zur Neutralisation der entstehenden Salzsäure bevorzugt eine Base, beispielsweise Pyridin oder Triethylamin hinzugegeben.

Bei der Verwendung von Alkalialkoholaten als Katalysator wird eine Reaktionstemperatur von 20 bis 150°C bevorzugt, insbesondere 40 bis 80°C, wobei zur Abtrennung des Katalysators dieser mit einer Säure wie Phosphorsäure

neutralisiert wird, und das ausfallende Alkalisalz der betreffenden Säure abgetrennt wird.

Bei der Verwendung von Tetraisopropylorthotitanat als Katalysator wird eine Reaktionstemperatur von 40 bis 250°C bevorzugt, insbesondere 100 bis 200°C, wobei der überschüssige Katalysator nach erfolgter Reaktion beispielsweise durch Hinzufügen von Phosphorsäure desaktiviert werden kann.

Die Reaktion kann bei Normaldruck, Vakuum oder Überdruck durchgeführt werden. Üblicherweise wird am Ende der Reaktion ein Vakuum von 0,1 bis 5 mbar zur Entfernung der letzten Reste an leichter siedenden Anteilen angelegt. Die Reaktion ist beendet, wenn keine leichter siedenden Anteile mehr überdestillieren.

Die entstandenen Polyetherpolycarbonatdiole weisen ein durchschnittliches Molekulargewicht $\overline{M}_n$ (Zahlenmittelwert) von 200 bis 12000, insbesondere von 500 bis 6000 sowie ganz besonders von 1000 bis 2500 auf.

Die Herstellung der thermoplastischen Polyurethane, der Polyetherester und der Polyetheramide erfolgt nach üblichen, dem Fachmann an sich bekannten Verfahren, wobei als Diolkomponente für die Weichphase Polyetherpolycarbonatdiole, die sich durch Umsetzung - wie in der voranstehenden Beschreibung aufgeführt-einer Carbonatkomponente mit $b_1$) und $b_2$) ergeben, eingesetzt werden. Wegen näherer Einzelheiten sei auf die einschlägige Literatur verwiesen.

Im Fall der thermoplastischen Polyurethane werden Polyetherpolycarbonatdiole mit organischen Polyisocyanaten und Kettenverlängerern in bekannter Weise umgesetzt, wobei sowohl die One-shot-Fahrweise (d.h. alle drei Komponenten werden gleichzeitig umgesetzt) als auch die Präpolymer-Fahrweise (d.h. ein Präpolymer aus Polyetherpolycarbonatdiol und Polyisocyanat wird mit dem Kettenverlängerer umgesetzt) angewandt werden kann.

Als Polyisocyanate können alle herkömmlichen für thermoplastische Polyurethane eingesetzten Polyisocyanate verwendet werden, wie 4,4'-Diphenylmethandiisocyanat, 2,4-Toluylendiisocyanat, 2,6-Toluylendiisocyanat, Naphthalindiisocyanat, Hexamethylendiisocyanat, Isophorondiisocyanat, 2-(3-Isocyanatopropyl)-cyclohexylisocyanat und kernhydriertes 4,4'-Diphenylmethandiisocyanat sowie deren Mischungen.

Die verwendeten Kettenverlängerer sind ebenfalls bekannt und werden üblicherweise zur Herstellung von thermoplastischen Polyurethanen eingesetzt. Beispielhaft seien Diole, Diamine, Dithiole, Mercaptoalkohole, Aminoalkohole und Aminothiole mit $C_2$- bis $C_9$-Alkylgruppen oder deren Mischungen genannt, insbesondere Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, Neopentylglykol, Buten-2-diol-1,4, Butin-2-diol-1,4, 2-Butyl-2-ethyl-1,3-propandiol, 2-Aminopropanol-1, 3-Amino-2,2'-dimethylpropanol; weiterhin seien Diole, Diamine und Dithiole mit $C_9$- bis $C_{14}$-Cycloalkylgruppen, die durch $C_1$- bis $C_4$-Alkylgruppen substituiert sein können, sowie deren Mischungen erwähnt, bevorzugt Cyclohexandimethanol; ferner aromatische und heterocyclische Verbindungen wie Hydrochinon, Resorcin, p-Kresol, p-Aminophenol, 2,7-Dihydroxynaphthalin, 4,4'-Dihydroxydiphenyl und 4,5-Bis-(hydroxymethyl)-2-methylimidazol.

Die Bedingungen der Umsetzung von Polyisocyanaten, Polyetherpolycarbonatdiolen und Kettenverlängerern sind bekannt; i.a. wird bei Temperaturen im Bereich von 50 bis 300°C umgesetzt.

Verfahren zur Herstellung von Polyetherestern und Polyetheramiden sind beispielsweise in Chimica 28, 9 (1974), S. 544ff und in Journal Macromol. Sci. AI (4), 617-625 (1967) beschrieben.

Als Komponente C) können die erfindungsgemäßen Formmassen 0 bis 50, vorzugsweise 5 bis 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 mm, vorzugsweise 8 bis 50 mm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A) und B) sowie ggf. C) können die erfindungsgemäßen Formmassen noch übliche Zusatzstoffe und Verarbeitungshilfsmittel D) enthalten in Mengen bis zu 30, vorzugsweise bis zu 20 Gew.-%. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum, insbesondere eine gute Schlagzähigkeit, insbesondere eine gute multiaxiale Schlagzähigkeit, eine gute Dimensionsstabilität und Kraftstoffbeständigkeit aus.

Demzufolge eignen sie sich zur Herstellung von Formkörpern jeglicher Art, wobei Anwendungen als Benzintankgeber besonders bevorzugt sind.

Beispiele

Komponente A:

Polyoxymethylencopolymerisat aus 97,3 Gew.% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g /10 min (190°C/2,16 kg, nach DIN 53 735).

Komponente B:

Herstellung des Polyetherpolycarbonatdiols:

2114 g (8,7 mol) Polyoxytetramethylendiol $b_1$) mit $\overline{M}_n$ = 243, 87 g (0,97 mol) 1,4-Butandiol $b_2$) und 1014 g (8,58 mol) Diethylcarbonat $b_3$) sowie 0,161 g (50 ppm) Tetraisopropylorthotitanat wurden zum Sieden erhitzt und das dabei gebildete Ethanol ständig in einer Destillationskolonne (25 cm Füllhöhe, Füllkörper: 5 mm V-Stahl-Netze) unter Normaldruck bei einem Rücklaufverhältnis von 6:1 vom nicht umgesetzten Diethylcarbonat destilliert. Die Reaktion wurde bei einer Temperatur von 175°C durchgeführt. Zur Entfernung der leichtersiedenden Anteile wurde ein verminderter Druck von 0,3 mbar (30 Pa) angelegt.

Ausbeute: 2395 g
$\overline{M}_n$ = 1968
OH-Zahl = 57

Die Bestimmung der OH-Zahl und des mittleren Molekulargewichts $\overline{M}_n$ (Zahlenmittelwert) wurde wie folgt durchgeführt:
Das mittlere Molekulargewicht $\overline{M}_n$ (Zahlenmittelwert) wurde aus der OH-Zahl errechnet ($\overline{M}_n$ = 112200/OH-Zahl). Die OH-Zahl wurde durch potentiometrische Titration nach der PSA-Methode bestimmt.

Herstellung des thermoplastischen Polyurethans B:

1500 g dieses Polyetherpolycarbonatdiols, bei dem der Katalysator durch Hinzufügen von Phosphorsäure desaktiviert wurde, wurde eine Stunde bei 110°C und bei einem Druck von 5 mbar getrocknet, mit 187,5 g 1,4-Butandiol versetzt, auf 70°C gebracht und mit einer auf 65°C erhitzten Schmelze von 722,1 g 4,4'-Diphenylmethandiisocyanat unter Rühren versetzt. Nachdem die Reaktionsmischung eine Temperatur von 120°C erreicht hatte, wurde sie auf eine Platte mit einer Temperatur von 125°C gegossen. Anschließend wurde das Rohprodukt zerkleinert und 15 h bei 100°C im Trockenschrank getrocknet sowie mittels einer Schnittmühle ein Granulat hergestellt.
Das Produkt wies eine Härte nach Shore A von 85 auf (gemessen gemäß DIN 53 505).
Zum Vergleich wurden folgende thermoplastische Polyurethane eingesetzt (gemäß EP-A-117 664 und EP-A-116 456):

Komponente B/1V

Ein thermoplastisches Polyurethan aufgebaut aus:

57,9 Gew.-% Polyoxytetramethylendiol ($M_n$: 1000)
7,3 Gew.-% 1,4-Butandiol
34,8 Gew.-% 4,4'-Diphenylmethandiisocyanat.

Komponente B/2V

Ein thermoplastisches Polyurethan aufgebaut aus:

41,4 Gew.-% Adipinsäure
33,8 Gew.-% 1,4-Butandiol
24,8 Gew.-% 4,4'-Diphenylmethandiisocyanat

Härte nach Shore A: 85

Herstellung der Polyoxymethylenformmassen

Die Komponente A) wurde mit der Komponente B) bei einer Temperatur von 230°C auf einem Doppelschneckenextruder gemischt, homogenisiert, entgast und das homogenisierte Gemisch durch eine Düse als Strang ausgepreßt und granuliert.

Anschließend wurden auf einer Spritzgußmaschine bei 200°C Prüfkörper hergestellt, wobei zur Bestimmung der Schlagzähigkeit übliche Testkästchen und zur Bestimmung der Durchstoßarbeit und Dimensionsstabilität Rundscheiben (Durchmesser: 60 mm, Dicke: 2 mm) verwendet wurden.

Es wurden folgende Messungen durchgeführt:

Kerbschlagzähigkeit $a_k$ gemäß DIN 53 453
Lochkerbschlagzähigkeit $a_{k1}$ gemäß DIN 53 753
Durchstoßarbeit $w_{ges}$ gemäß DIN 53 443

Kraftstoffbeständigkeit gemäß DIN 51604-B des Fachausschusses Mineral- und Brennstoffnormung bei 50°C und üblichem Prüfkraftstoff (84,5 % bleifreies Superbenzin, 15 % Methanol, 0,5 Gew.-% Wasser).

Die Lagerung der Prüfkörper erfolgte über einen Zeitraum von 10 Wochen, wobei jede Woche Prüfkörper entnommen und bei Raumtemperatur abgekühlt und getrocknet wurden.

Die Gewichtsverluste wurden in [%] berechnet, u.zw. in bezug auf die Ausgangsproben (ohne Lagerung) sowie die Durchstoßarbeit bestimmt. Die angegebenen Werte entsprechen einem Mittelwert aus 10 Messungen.

Zusammensetzung der Formmassen:

80 Gew.-% A) und
20 Gew.-% der jeweiligen Komponente B)

Die Ergebnisse der Messungen sind den Tabellen zu entnehmen.

Tabelle 1

| Beispiel | Komponente B [Gew.-%] | $a_k$ [kJ/m$^2$] | | | $a_{k1}$ [kJ/m$^2$] | | |
|---|---|---|---|---|---|---|---|
| | | 23°C | -20°C | -40°C | 23°C | -20°C | -40°C |
| 1 | 20 B | 8 | 6 | 4 | 56 | 31 | 20 |
| 2* | 20 B/1V | 5 | 3 | 2 | 42 | 27 | 23 |
| 3* | 20 B/2V | 8 | 4 | 2 | 52 | 26 | 22 |

* zum Vergleich

Tabelle 2

| Meßmethode Beispiel | W ges. [Nm] | | | Gewichtsänderungen [%] | | |
|---|---|---|---|---|---|---|
| | 1 | 2* | 3* | 1 | 2* | 3* |
| 0. Woche | 51 | 26 | 43 | 0,0 | 0,0 | 0,0 |
| 1. Woche | 48 | 23 | 37 | 1,5 | 4,6 | 2,5 |
| 2. Woche | 44 | 24 | 28 | 2,0 | 5,0 | 3,0 |
| 3. Woche | 45 | 25 | 30 | 2,5 | 4,8 | 3,3 |
| 4. Woche | 45 | 27 | 28 | 2,3 | 4,7 | 3,4 |
| 5. Woche | 46 | 25 | 30 | 2,3 | 4,8 | 3,6 |
| 6. Woche | 45 | 24 | 30 | 2,7 | 4,6 | 3,8 |
| 7. Woche | 40 | 26 | 26 | 2,7 | 4,9 | 3,6 |

Tabelle 2 (fortgesetzt)

| Meßmethode Beispiel | W ges. [Nm] | | | Gewichtsänderungen [%] | | |
|---|---|---|---|---|---|---|
| | 1 | 2* | 3* | 1 | 2* | 3* |
| 8. Woche | 39 | 26 | 28 | 1,9 | 4,2 | 3,1 |
| 9. Woche | 38 | 22 | 27 | 1,7 | 3,2 | 2,6 |
| 10. Woche | 31 | 22 | 16 | 1,4 | 1,7 | 1,1 |

Die erfindungsgemäße Mischung 1 ist vor der Benzinlagerung im Vergleich zur Mischung 3* (mit Polyester als Weichsegment) bezüglich der $A_K$, $A_{KL}$ und multiaxialen Zähigkeit vergleichbar bzw. besser. Bei -20°C und -40°C liegen die AK-Werte sogar bis um 100 % höher. Gegenüber dem Polyether-TPU 2* liegen die Werte für die erfindungsgemäße Mischung in jedem Fall günstiger.

Bei der Benzinlagerung zeigt sich die Überlegenheit der erfindungsgemäßen Mischung. Besonders im Vergleich zum Polyester-Polyurethan 3* das dieselbe Ausgangszähigkeit besitzt, bleibt bei der erfindungsgemäßen Mischung die Zähigkeit erhalten, während sie bei Nr. 3* drastisch abfällt. Die Zähigkeit des Polyether-Polyurethans 2* bleibt, wie auch aus dem Eigenschaftsprofil der Polybekannt ist, zwar während der Benzinlagerung erhalten, sie liegt jedoch insgesamt auf einem sehr viel niedrigeren Niveau.

Bei den Gewichtsänderungen schneidet die erfindungsgemäße Probe 1 am besten ab, d.h. sie saugt am wenigsten Kraftstoff auf und nimmt dadurch am wenigsten an Gewicht zu. Gegen Ende der Lagerungen nehmen die Gewichte aller Proben wieder ab, da die Matrices beginnen, sich aufzulösen. Dieser Vorgang ist bei den Vergleichsproben 2* und 3* am stärksten ausgeprägt. Die erfindungsgemäße Probe 1 dagegen bleibt am besten erhalten.

**Patentansprüche**

**1.** Thermoplastische Formmassen, enthaltend

A) 10 bis 97 Gew.-% eines Polyoxymethylenhomo- oder -copolymerisats

B) 3 bis 50 Gew.-% eines thermoplastischen Elastomers aus der Gruppe der thermoplastischen Polyurethane, der Polyetherester und der Polyetheramide, die sich von Polyetherpolycarbonatdiolen als deren Weichphase ableiten und

C) 0 bis 50 Gew.-% eines faser- oder teilchenförmigen Füllstoffes oder deren Mischungen sowie

D) 0 bis 30 Gew.-% üblicher Zusatzstoffe und Verarbeitungshilfsmittel,

dadurch gekennzeichnet, daß die Polyetherpolycarbonatdiole, welche die Weichphase des thermoplastischen Elastomers B) bilden, im wesentlichen aufgebaut sind aus:

$b_1$) 3 bis 63,7 mol-% an Einheiten, die sich ableiten von einem Polyoxytetramethylendiol

$b_2$) 63,7 bis 3 mol-% an Einheiten, die sich ableiten von einem von $b_1$) verschiedenen Polyoxyalkylendiol mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen und

$b_3$) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

**2.** Thermoplastische Formmassen nach Anspruch 1, dadurch gekennzeichnet, daß als Komponente $b_2$) ein aliphatisches Diol mit 2 bis 8 C-Atomen eingesetzt wird.

**3.** Thermoplastische Formmassen nach den Ansprüchen 1 bis 2, dadurch gekennzeichnet, daß als Komponente $b_2$) ein Dialkylcarbonat mit $C_1$- bis $C_3$-Alkylgruppen eingesetzt wird.

**4.** Thermoplastische Formmassen nach den Ansprüchen 1 bis 3, enthaltend

A) 40 bis 95 Gew.-%

B) 5 bis 40 Gew.-%.

**5.** Verwendung der thermoplastischen Formmassen gemäß den Ansprüchen 1 bis 4 zur Herstellung von Formkörpern, Fasern und Folien.

**6.** Formkörper, erhältlich aus den thermoplastischen Formmassen gemäß den Ansprüchen 1 bis 4.

## Claims

**1.** A thermoplastic molding material containing

A) from 10 to 97% by weight of a polyoxymethylene homo- or copolymer,
B) from 3 to 50% by weight of a thermoplastic elastomer selected from the group consisting of the thermoplastic polyurethanes, the polyetheresters and the polyetheramides, the flexible phase of which is derived from polyetherpolycarbonatediols,
C) from 0 to 50% by weight of a fibrous or particulate filler or a mixture thereof and
D) from 0 to 30% by weight of conventional additives or processing assistants,

wherein the polyetherpolycarbonatediols which form the flexible phase of the thermoplastic elastomer B) are essentially composed of:

$b_1$) from 3 to 63.7 mol % of units which are derived from a polyoxytetramethylenediol,
$b_2$) from 63.7 to 3 mol % of units which are derived from a polyoxyalkylenediol differing from $b_1$) and having $C_2$-$C_8$-alkylene groups, an aliphatic alkanediol of 2 to 14 carbon atoms, an alicyclic alkanediol of 3 to 14 carbon atoms or an alkylene oxide of 2 or 3 carbon atoms or a mixture thereof, and
$b_3$) from 33.3 to 50 mol % of units which are derived from phosgene, a dialkyl carbonate having $C_1$-$C_4$-alkyl groups or a cyclic carbonate having $C_2$-$C_4$-alkylene bridges or a mixture thereof.

**2.** A thermoplastic molding material as claimed in claim 1, wherein the component $b_2$) used is an aliphatic diol of 2 to 8 carbon atoms.

**3.** A thermoplastic molding material as claimed in claim 1 or 2, wherein the component $b_2$) used is a dialkyl carbonate having $C_1$-$C_3$-alkyl groups.

**4.** A thermoplastic molding material as claimed in any of claims 1 to 3, containing

A) from 40 to 95% by weight
B) from 5 to 40% by weight.

**5.** The use of a thermoplastic molding material as claimed in any of claims 1 to 4 for the production of moldings, fibers and films.

**6.** A molding obtainable from a thermoplastic molding material as claimed in any of claims 1 to 4.

## Revendications

**1.** Matières à mouler thermoplastiques comportant

A) de 10 à 97 % en poids d'un homo ou copolymère polyoxyméthylène

B) de 3 à 50 % en poids d'un élastomère thermoplastique choisi dans le groupe constitué par les polyuréthannes thermoplastiques, les polyétheresters et les polyétheramides, qui dérivent des polyétherpolycarbonatediols sous forme de leur phase molle et

C) de 0 à 50 % en poids d'une charge sous forme de fibres ou de particules, ou leurs mélanges, ainsi que

D) de 0 à 30 % en poids d'additifs habituels et d'agents de transformation habituels,

caractérisé en ce que les polyétherpolycarbonatediols qui forment la phase molle de l'élastomère thermoplastique B), sont essentiellement constitués de

$b_1$) de 3 à 63,7 moles % d'unités qui dérivent d'un polyoxytétraméthylènediol

$b_2$) de 63,7 à 3 moles % d'unités qui dérivent d'un polyoxyalkylènediol différent de $b_1$) ayant des groupes alkylènes en $C_2$-$C_8$, d'un alcanediol aliphatique avec de 2 à 14 atomes de carbone, d'un alcanediol alicyclique ayant de 3 à 14 atomes de carbone, ou d'un alkylèneoxyde ayant 2 ou 3 atomes de C ou de leurs mélanges et

$b_3$) de 33,3 à 50 moles % d'unités qui dérivent du phosgène, d'un dialkylcarbonate ayant des groupes alkyles en $C_1$-$C_4$ , ou d'un carbonate cyclique ayant des ponts alkylènes de $C_2$-$C_4$ ou leurs mélanges.

**2.** Matières à mouler thermoplastiques selon la revendication 1, caractérisées en ce que, comme composant $b_2$), on utilise un diol aliphatique ayant de 2 à 8 atomes de carbone.

**3.** Matières à mouler thermoplastiques selon les revendications 1 ou 2, caractérisées en ce que, comme composant $b_2$), on utilise un dialkylcarbonate ayant des groupes alkyles en $C_1$-$C_3$.

**4.** Matières à mouler thermoplastiques selon les revendications 1 à 3, comportant

A) de 40 à 95 % en poids

B) de 5 à 40 % en poids.

**5.** Utilisation des matières à mouler thermoplastiques selon les revendications 1 à 4 pour préparer des corps moulés, des fibres et des feuilles.

**6.** Corps moulés que l'on peut obtenir à partir des matières à mouler thermoplastiques selon les revendications 1 à 4.